# EUROPÄISCHE PATENTSCHRIFT

(11) **EP 1 258 304 B1**
(45) Veröffentlichungstag und Bekanntmachung des Hinweises auf die Patenterteilung: **10.06.2009**
(21) Anmeldenummer: 02007884.6
(22) Anmeldetag: 09.04.2002
(51) Int. Cl.: B23C 5/20

(54) **Schneidwerkzeug**
Milling tool
Fraise

(30) Priorität: 18.05.2001 DE 10124234
(43) Veröffentlichungstag der Anmeldung: 20.11.2002
(73) Patentinhaber: Fette GmbH, 21493 Schwarzenbek (DE)
(72) Erfinder: Popke, Herbert, Prof. Dr., 39179 Ebendorf (DE)
(74) Vertreter: Hauck Patent- und Rechtsanwälte

(56) Entgegenhaltungen:
- EP-A- 0 620 070
- EP-A- 0 870 563
- US-A- 3 163 919
- US-A- 3 371 397
- US-A- 5 868 529

## Beschreibung

Die Erfindung bezieht sich auf ein Schneidwerkzeug nach dem Oberbegriff des Patentanspruchs 1 (siehe z.B. US-A-3 163 919). Insbesondere bezieht sich die Erfindung auf ein Schneidwerkzeug mit mindestens zwei Schneidplatten, die an einem Trägerkörper befestigbar sind und die bei der Rotation des Schneidwerkzeugs nacheinander mit einem Werkstück in spannenden Eingriff gelangen, wenn der Trägerkörper zugleich einen linearen Vorschub erfährt.

Ein typisches Beispiel für ein derartiges Schneidwerkzeug ist ein Plan- oder Eckfräser, der beispielsweise mit Wendeschneidplatten bestückt ist. Die Wendeschneidplatten sind typischerweise in einer vorgegebenen Teilung gleichmäßig am Umfang des Trägerkörpers angebracht.

Wendeschneidplatten sind bei derartigen Werkzeugen allgemein üblich, aber auch bei speziellen Bohrwerkzeugen, Reibahlen oder dergleichen. Die nachfolgend zu erläuternde Erfindung ist jedoch nicht auf die Verwendung von Wendeschneidplatten beschränkt, obwohl zu Erläuterungszwecken hierauf im Wesentlichen eingegangen wird.

Die Wendeschneidplatten werden üblicherweise entweder unmittelbar in entsprechenden Taschen des Trägerkörpers in bekannter Weise eingespannt oder auch mit Hilfe von sogenannten Kassetten, die ihrerseits in Taschen des Trägerkörpers befestigt werden.

Für die Wirkungsweise eines derartigen Schneidwerkzeugs, z.B. Fräswerkzeug, ist die Positionierung der Schneidkante relativ zur Achse des Trägerkörpers von Bedeutung. Maßgebend sind der Axialwinkel, der Radialwinkel und der Einstellwinkel. Axialwinkel meint die Relativlage einer Schneidplatte bzw. ihrer Schneide gegenüber der Rotationsachse des Fräskörpers. Der Radialwinkel ist der Winkel zwischen der Fräsplattenebene und einem Radius des Trägerkörpers. Der Einstellwinkel ist der Winkel, den die Schneidkante in Bezug auf die Zustellrichtung des Werkzeugs aufweist. Üblicherweise sind alle Winkel ungleich 90°. Aus naheliegenden Gründen wird angestrebt, dass der Eingriff der Schneidkante am Werkstück nicht über die gesamte Länge der Schneidkante gleichzeitig erfolgt, sondern von einem Ende ausgehend, allmählich. Dadurch werden die Belastung der Schneidplatte bzw. der Schneidkante minimiert sowie die Schwingungen, die naturgemäß beim Zerspanen mit mehreren Schneidplatten durch deren Aufschläge auftreten.

Bei der Zerspanung mit den beschriebenen Schneidwerkzeugen spielt eine Reihe von Parametern eine Rolle. Erwünscht ist ein hohes Spanvolumen pro Zeiteinheit bei minimaler Belastung der Schneidkante und einem Minimum an Schnittkraft. Die Schnittkraft beeinflusst naturgemäß den Energieverbrauch einer Zerspanoperation. Hohe Schneidenbelastungen führen zu kurzen Standzeiten und damit zu Auswechselvorgängen, die zeitraubend sind und die gesamte Fertigungszeit beeinflussen. Ferner wird der Fertigungsaufwand durch unterschiedliche Gegebenheiten beim Einsatz von Schneidplatten beeinflusst. Bei der herkömmlichen Zerspanungstechnik haben die Schneidplatten eine identische Position und Ausrichtung am Trägerkörper, so dass zumeist nur bestimmte Bereiche einer Schneidkante einer besonderen Belastung unterliegen. Sobald der am meisten beanspruchte Bereich der Schneidkante nicht mehr einsatzfähig ist, muss die Schneidplatte ausgetauscht oder gewendet werden. Dies führt zu einer unvollständigen Ausnutzung einer Schneidplatte.

Es ist bekannt, durch eine unterschiedliche Teilung am Umfang des Trägerkörpers für die Anordnung der Schneidplatten eine dämpfende Wirkung zu erzielen.

Der Erfindung liegt die Aufgabe zugrunde, ein Schneidwerkzeug der gattungsgemäßen Art so zu verbessern, dass die Schnittkraft minimiert wird bzw. bei gleicher Maschinenleistung ein höheres Spanvolumen erhalten werden kann. Außerdem soll die Aufgabe darin bestehen, die Ausnutzung der Schneidplatten zu verbessern.

Diese Aufgabe wird durch die Merkmale des Patentanspruchs 1 gelöst.

Bei dem erfindungsgemäßen Schneidwerkzeug gelangen unterschiedliche Bereiche der Schneidkanten mit dem Werkstück in Eingriff, wobei jede Schneidkante einen Teilbetrag für die vorgegebene Frästiefe leistet. Die Frästiefe wird durch die Zustellung des Schneidwerkzeugs in der Maschine bestimmt. Bei herkömmlichen Schneidwerkzeugen ist die Zustellung derart, dass über die Länge der Schneidkante der größere Bereich mit dem Werkstück in Eingriff gelangt. Bei der Erfindung hingegen kommen nur Abschnitte der Schneidkante einer Schneidplatte jeweils mit dem Werkstück in Eingriff. So können zum Beispiel die beiden Schneidplatten parallel zu sich selbst versetzt angeordnet werden derart, dass die Schneidkante der voreilenden Platte eines Paares von Schneidplatten bis zu einer ersten Frästiefe arbeitet und die nacheilende den Rest der Frästiefe herstellt. Dies nur für eine Umdrehung betrachtet, denn bei jeder weiteren Umdrehung sind alle Schneidplatten jeweils nacheilend. Die Anteile der Schneidkantenabschnitte an der Gesamtfrästiefe können gleich oder auch unterschiedlich sein.

Es ist jedoch auch denkbar, die Einstellwinkel der versetzt angeordneten Schneidplatten unterschiedlich zu wählen, und zwar für die nacheilende Kante größer als für die voreilende Schneidkante (jeweils für ein Paar bei einer Umdrehung betrachtet).

Es ist auch möglich, die Schneidkanten Plattenpaaren winkelmäßig zu versetzen, ohne einen deutlichen Höhenversatz. Hierbei wird von den zwei Schneidplatten jeweils nur eine im kritischen Bereich hoch belastet, während die andere im weniger kritischen Schneidkantenbereich über eine größere Länge eine Belastung erfährt. Daher kann nach Verschleiß der höher belasteten Schneidplatte diese mit der anderen ausgetauscht werden, wodurch die Gesamtstandzeit beider Platten erhöht wird.

Es ist auch möglich, die Schneide oder Schneidkante der einen Schneidplatte als Schruppschneide und die der anderen als Schlichtschneide zu verwenden. In diesem Fall kommt nur ein geringer Bereich der Länge einer Schneidkante als Schlichtschneiden zum Einsatz.

Bei dem erfindungsgemäßen Schneidwerkzeug werden entweder identische Schneidplatten eingesetzt oder auch unterschiedliche, z.B. Schneidplatten mit gerader und gekrümmter Schneide.

Vorstehend wurde nur von zwei Schneidplatten bzw. einem Schneidplattenpaar gesprochen. Es versteht sich, dass eine beliebige Anzahl von Paaren von Schneidplatten vorgesehen werden kann, um eine Schnittaufteilung bei einem Schneidwerkzeug nach der Erfindung zu gewährleisten. Es ist ferner möglich, die Paare in gleicher Teilung anzuordnen oder auch mit unterschiedlicher Teilung, um das Schwingungsverhalten zu verbessern. Außerdem kann eine Schnittaufteilung mit mehr als zwei Schneidkanten vorgesehen werden, z.B. mit drei oder auch mehr Schneidplatten. Die Schneidplatten werden vorzugsweise in Verbindung mit Kassetten eingesetzt, wie an sich bei derartigen Schneidwerkzeugen bekannt. Die Kassetten können für die Aufnahme von zwei oder mehr Schneidplatten ausgelegt sein, die dann den oben beschriebenen Versatz zueinander haben.

Die erfindungsgemäße Schnittaufteilung hat den Vorteil, dass bei gleicher Maschinenleistung ein höheres Spanvolumen erzielbar ist, ohne dass es zu einer größeren Beeinträchtigung der Schneidkanten kommt. Im Gegenteil, die Standzeit der Schneidplatten pro Werkzeug lässt sich erhöhen, wenn dafür gesorgt wird, dass eine Gesamtausnutzung der Schneidkante verbessert wird.

Die Erfindung wird nachfolgend anhand von Ausführungsbeispielen näher erläutert.
Fig. 1 zeigt schematisch ein erstes Ausführungsbeispiel für eine erfindungsgemäße Schnittaufteilung.
Fig.2 zeigt schematisch ein zweites Ausführungsbeispiel für eine erfindungsgemäße Schnittaufteilung.
Fig. 3 zeigt schematisch ein drittes Ausführungsbeispiel für eine erfindungsgemäße Schnittaufteilung.
Fig. 4 zeigt schematisch in einer ersten Ausführungsform zwei Schneidplatten mit Schnittaufteilung.
Fig. 5 zeigt schematisch eine zweite Ausführungsform der Schneidplatten mit einer anderen Schnittaufteilung.
Fig. 6 zeigt schematisch zwei kreisförmige Schneidplatten mit einer Schnittaufteilung nach der Erfindung.
Fig. 7 zeigt schematisch zwei weitere beispielhafte Schneidplatten mit einer erfindungsgemäßen Schnittaufteilung in einer weiteren Ausführungsform.
Fig. 8 zeigt schematisch ähnliche Schneidplatten wie Figuren 4 und 5 in einer dritten Ausführungsform einer Schnittaufteilung.
Fig. 9 zeigt schematisch eine vierte Ausführungsform einer Schnittaufteilung mit den Schneidplatten nach Fig. 8.
Fig. 10 zeigt schematisch eine kreisförmige und eine rechteckige Schneidplatte, die zusammen eine weitere Ausführungsmöglichkeit für eine Schnittaufteilung darstellen.

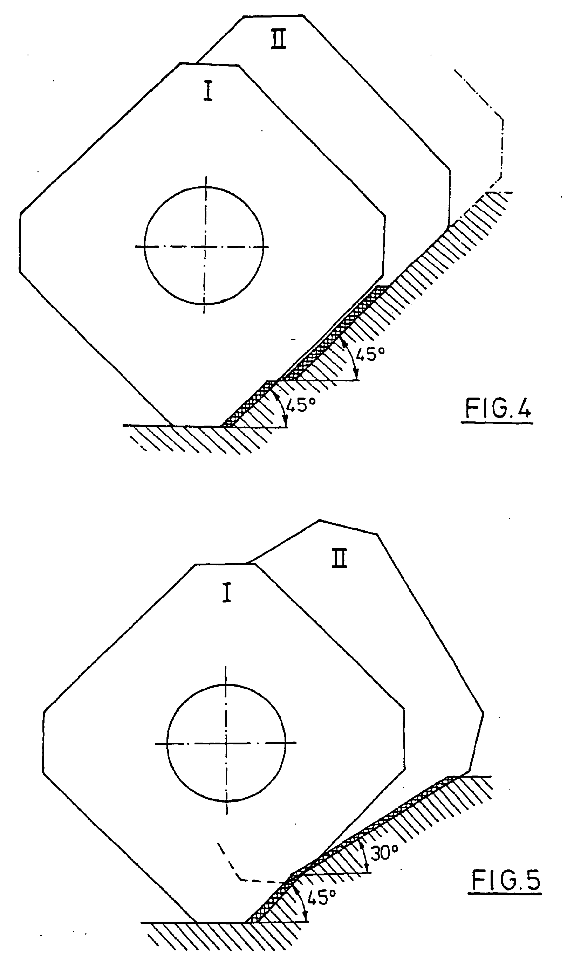

Bei der nachfolgenden beispielhaften Beschreibung wird von einem Fräswerkzeug ausgegangen, bei dem der Werkzeugträger rotierend eingespannt ist und an seinem Umfang mehrere Paare von Schneidplatten enthält, wie sie in den Figuren 4 bis 10 als Beispiel dargestellt sind. Diese Paare können in gleichmäßiger Teilung oder auch in ungleichmäßiger Teilung am Umfang des nicht gezeigten Trägerkörpers eingespannt werden. Sie können mit einem vorgegebenen Axial- und/oder Radialwinkel eingestellt werden. Hierauf wird im Einzelnen nicht eingegangen. Diese Beziehungen sind allgemein bekannt wie auch die weiteren Winkel, die für die Zerspanung von Bedeutung sind, wie Span- und Freiwinkel und das entsprechende Vorzeichen der einzelnen Winkel. Nur beispielhaft wird auf EP 0 615 718 verwiesen, das den grundsätzlichen Aufbau eines derartigen Fräsers wiedergibt. In dieser Schrift sind die Fräser unmittelbar in Taschen des Trägerkörpers eingespannt. Bevorzugt wird jedoch die Anordnung in sogenannten Kassetten vorgesehen, die ihrerseits in entsprechenden Ausnehmungen oder Taschen des Trägerkörpers lösbar befestigt sind.

Nachstehend wird stets nur von einem Schneidenpaar gesprochen, ohne dass angegeben ist, wieviel Paare an einem Trägerkörper vorgesehen sind. Die Befestigung im Trägerkörper kann mit herkömmlichen Mitteln erfolgen. Im Übrigen ist auch denkbar, statt einem Paar drei Platten in entsprechender Teilung am Umfang des Trägerkörpers anzubringen. Die Schneidplatten können im Übrigen übliche Wendeschneidplatten sein oder nur mit einer Schneide bzw. Schneidkante versehen werden. Über die Geometrie der Schneidkante ist keine Aussage getroffen. Sie kann den jeweiligen Gegebenheiten angepasst sein.

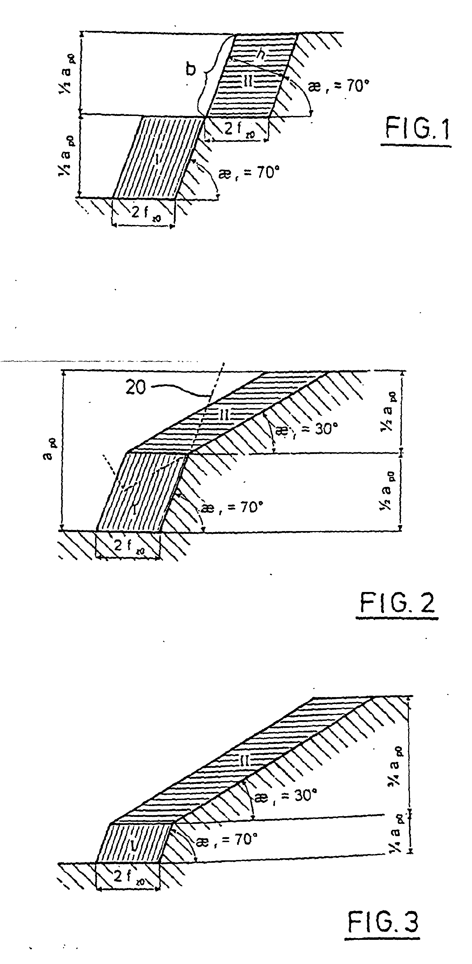

In den Figuren 1 bis 3 ist die Schnittfläche von nicht weiter gezeigten Werkstücken im Querschnitt dargestellt, auf welche die Schneiden aufeinanderfolgender Schneidplatten bei der Drehung des Trägerkörpers am Werkstück treffen. Die Länge der Fläche wird allgemein mit b und die Breite mit h angegeben. Der Einstellwinkel der Schneidplatten I, II ist in Fig. 1 mit κ = 70° angegeben. In dem Ausrührungsbeispiel nach Fig. 2 hat die Schneidplatte I einen Einstellwinkel von 70° und die Schneidplatte II einen Einstellwinkel von 30°. Im Ausführungsbeispiel nach Fig. 3 hat die Schneidplatte I einen Einstellwinkel von 70° und die Schneidplatte II einen Einstellwinkel von 30°. Allgemein gilt, dass die Schneidenbelastung bei großer Länge und geringer Breite, b bzw. h, minimal ist. Es wird eine geringe Schnittkraft erhalten sowie eine dynamische Stabilität. Bei einem kleinen Einstellwinkel wird die Schneidenbelastung gering, wie etwa bei der Schneidplatte II nach Fign. 2 und 3.

In den Figuren ist aₚ₀ die Schnitttiefe und f_{z0} der Vorschub. In Fig. 1 übernimmt jeweils eine der beiden Platten nur eine Hälfte ½aₚ₀ die Schnitttiefe. Um zum gleichen Spanvolumen zu gelangen, wie es bei nur einer Schneidplatte mit dem gleichen Spanungsquerschnitt erzeugt wird, ist der Vorschub bei der Ausführung nach Fig. 1 zu verdoppeln. Insgesamt wird jedoch eine geringere Schnittkraft erhalten von z.B. etwa 10%. Ferner werden die Schwingungsimpulse reduziert. Da das Maß h relativ groß ist, wird auch ein stabiler Spanungsquerschnitt erhalten. Die Belastung der Schneiden der Platten I und II ist jedoch relativ hoch.

Fig. 4 zeigt zwei Schneidplatten I und II, mit welchen eine ähnliche Schnittaufteilung erhalten wird wie in Fig. 1, wobei jedoch der Anteil der Schneidkanten am Zerspanungsquerschnitt unterschiedlich ist. Der Frästiefenanteil der Platte I beträgt nur ein Drittel der Gesamtfrästiefe, während die Schneidplatte II zwei Drittel der Frästiefe erzeugt. Der Einstellwinkel in Fig. 4 beträgt 45° und in Fig. 1, wie erwähnt, 70°. In jedem Falle ist es möglich, die Schnittkraft zu reduzieren und damit bei gleicher Maschinenleistung ein höheres Spanvolumen zu erzielen.

Bei der Ausführungsform nach Fig. 2 übernehmen die Schneidplatten I und II jeweils die Hälfte der gesamten Frästiefe, weisen jedoch unterschiedliche Einstellwinkel auf, nämlich die Schneidplatte I einen Winkel κ = 70° und die Schneidplatte II einen Winkel κ = 30°. Die gestrichelt gezeichneten Schneidkanten, wie bei 20 angedeutet, stellen nicht genutzte bzw. belastete Schneidkantenabschnitte dar, während die belasteten mit durchgehenden Linien gezeichnet sind. Mithin ist die Schneidplatte II mit ihrem unteren Schneidkantenbereich nicht benutzt. Dieser Bereich ist aber normalerweise der am meisten belastete. Es ist daher möglich, nach einer Abnutzung der Schneidplatte I, deren Schneidkante im unteren Bereich hauptsächlich belastet ist, diese mit der Schneidplatte II zu tauschen, die noch einen unbenutzten unteren Schneidkantenbereich aufweist. Daher ist es möglich, die Gesamtstandzeit der Schneidplatten zu verlängern.

Zu Fig. 4 sei noch nachgetragen, dass gestrichelt eine dritte Schneidplatte angedeutet ist, die unter Schnittaufteilung mit den Schneidplatten I und II zusammenwirken kann.

Die Ausführungsform nach Fig. 3 unterscheidet sich von der nach Fig. 2 dadurch, dass die Schneidplatte II drei Viertel der Frästiefe aₚ₀ und die Schneidplatte I ein Viertel der Frästiefe aₚ₀ übernimmt. Die Winkelstellungen sind wie in Fig. 2.

Fig. 5 zeigt ein etwas konkreteres Ausführungsbeispiel gemäß Fig. 3. Allerdings hat die Schneidplatte I einen Einstellwinkel von 45° und die Schneidplatte II einen von 30°. Das Verhältnis der Frästiefen beträgt hier 1:3.

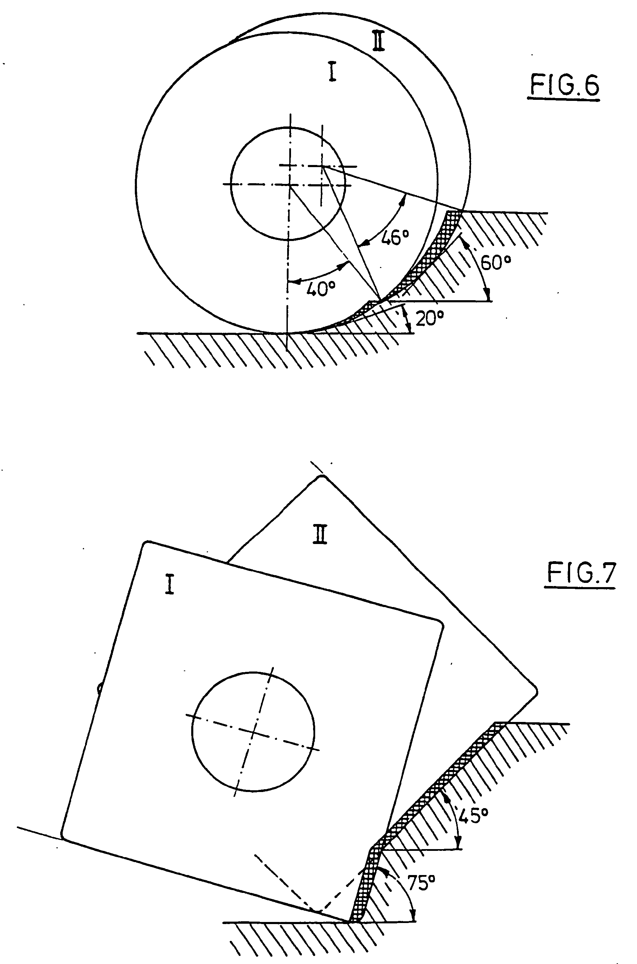

In Fig. 6 sind zwei kreisförmige Schneidplatten I und II gezeigt mit einer Schnittteilung derart, dass die Platte I ein Drittel und die Platte II zwei Drittel der Frästiefe erzeugen. Erstere Platte hat einen Einstellwinkel von 20° und die zweite einen von 60°. Im Hinblick auf die Vorteile einer solchen Schnittaufteilung gilt das bereits weiter oben Gesagte.

Bei der Ausführungsform nach den Figuren 4 und 5 sind oktogonale Schneidplatten vorgesehen, während bei der Ausführungsform nach Fig. 7 quadratische Schneidplatten I und II vorgesehen sind. Der Einstellwinkel der Schneidplatte I beträgt 75° und der der Schneidplatte II 45°. Letztere übernimmt wiederum im Wesentlichen zwei Drittel der Frästiefe, während die erstere ein Drittel übernimmt. Im Übrigen liegt Ähnlichkeit mit der Ausführungsform nach Fig. 5 vor, wobei jedoch bei der Ausführungsform nach Fig. 7 ein relativ großer Abschnitt der Schneidkante der Platte II nicht benutzt ist, wie durch die gestrichelte Linie angedeutet.

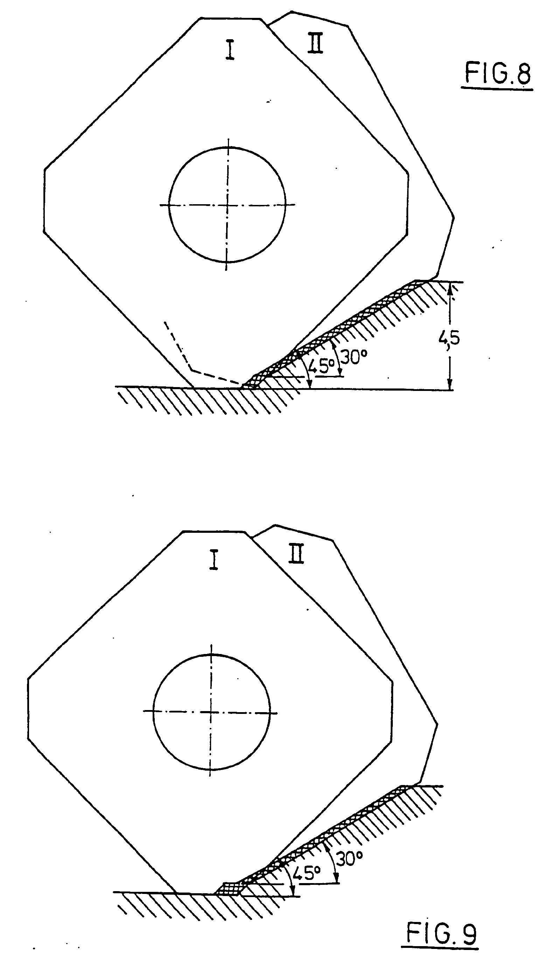

In den Figuren 8 und 9 sind zwei Beispiele dafür gezeigt, dass mit einem Schneidplattenpaar bzw. einer Mehrzahl von Schneidplattenpaaren sowohl Schruppen als auch Schlichten stattfindet. In beiden Fällen ist der Schneidkantenabschnitt der Schneidplatte II als Schruppschneide vorgesehen und die Schneidkante der Schneidplatte I als Schlichtschneide. Wie erkennbar, trägt die Schneidplatte II nur einen sehr geringen Teil der Frästiefe für die Zerspanung bei und kann daher relativ genau abtragen.

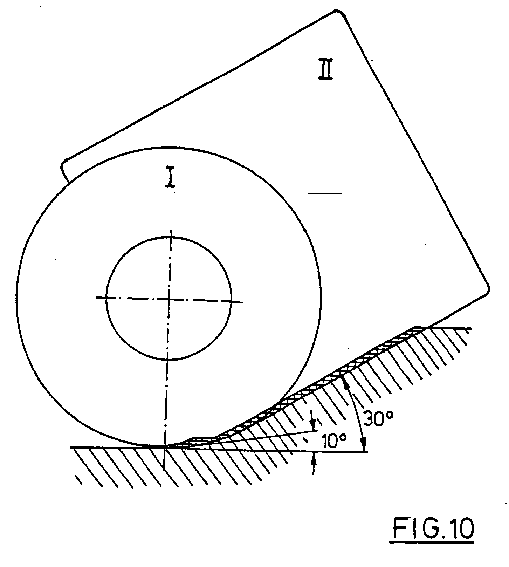

Bei der Ausrührungsform nach Fig. 10 ist eine kreisförmige Schneidplatte I und eine quadratische Schneidplatte II vorgesehen, die ein Paar bilden zwecks Schnittaufteilung. Der Einstellwinkel der Schneide der Platte II beträgt 30°. Die Schneide ist als Schruppschneide vorgesehen. Der Einstellwinkel der Platte I beträgt 10°. Diese Platte trägt nur zu einem minimalen Abtrag bei und dient mithin als Schlichtschneide.

Ohne das vorstehend deutlich herauszustellen, ergibt sich aus den Figuren von selbst, dass die gezeigten Schneidplatten mit einem Werkstück zusammenwirken, das spanend geformt wird. Die Werkstücke sind jedoch nicht mit einem besonderen Bezugszeichen versehen.

## Patentansprüche

1. Rotierendes Schneidwerkzeug mit einem um eine zentrale Achse rotierenden Trägerkörper, an dem mindestens zwei Schneidplatten befestigbar sind, die jeweils mindestens eine Schneidkante aufweisen und die nacheinander mit einem Werkstück in spanenden Eingriff gelangen, wenn der Trägerkörper rotiert und zugleich einen linearen Vorschub erfährt, wobei die Schneidplatten auf eine vorgegebene Frästiefe zustellbar sind, **dadurch gekennzeichnet, dass** die Schneidkante der einen Schneidplatte (I) zur Schneidkante der anderen Schneidplatte (II) so versetzt angeordnet ist, dass unterschiedliche Bereiche der Schneidkanten mit dem Werkstück in Eingriff gelangen und jede Schneidkante einen Teilbetrag für die vorgegebene Frästiefe (aₚ₀) leistet, wobei die Schneidkante der voreilenden Platte eines Paares von Schneidplatten bis zu einer ersten Frästiefe arbeitet und die nacheilende den Rest der Frästiefe herstellt.

2. Schneidwerkzeug nach Anspruch 1, **dadurch gekennzeichnet, dass** die Einstellwinkel (κ) beider Schneidkanten gleich sind.

3. Schneidwerkzeug nach Anspruch 1, **dadurch gekennzeichnet, dass** die Einstellwinkel (κ) unterschiedlich sind.

4. Schneidwerkzeug nach einem der Ansprüche 1 bis 3, **dadurch gekennzeichnet, dass** der Anteil der Schneidplatten (I, II) an der Frästiefe (aₚ₀) beider Schneidplatten gleich ist.

5. Schneidwerkzeug nach einem der Ansprüche 1 bis 3, **dadurch gekennzeichnet, dass** der Anteil der Schneidplatten (I, II) an der Frästiefe (aₚ₀) unterschiedlich ist.

6. Schneidwerkzeug nach einem der Ansprüche 3 bis 5, **dadurch gekennzeichnet, dass** der Einstellwinkel (κ) der Schneide, die die Resttiefe erzeugt, größer als der der anderen Schneidkante ist.

7. Schneidwerkzeug nach Anspruch 5 oder 6, **dadurch gekennzeichnet, dass** die Frästiefe der Schneidkante, die die Resttiefe erzeugt, kleiner ist als die der anderen Schneidkante.

8. Schneidwerkzeug nach Anspruch 7, **dadurch gekennzeichnet, dass** die Schneidkante, die die erste Frästiefe erzeugt, als Schruppschneide und die der anderen Schneidplatte als Schlichtschneide dient.

9. Schneidwerkzeug nach einem der Ansprüche 1 bis 8, **dadurch gekennzeichnet, dass** die Schneidplatten (I, II) geometrisch gleich geformt sind mit gerader oder gekrümmter Schneidkante.

10. Schneidwerkzeug nach einem der Ansprüche 1 bis 8, **dadurch gekennzeichnet, dass** eine erste Schneidplatte (I) mit kreisförmiger Schneidkante und eine zweite Schneidplatte (II) mit gerader Schneidkante vorgesehen sind.

11. Schneidwerkzeug nach Anspruch 10, **dadurch gekennzeichnet, dass** die Schneidkante der kreisförmigen Schneidplatte (I) als Schlichtschneide dient.

12. Schneidwerkzeug nach einem der Ansprüche 1 bis 11, **dadurch gekennzeichnet, dass** die Schneidplatten Wendeschneidplatten sind.

13. Schneidwerkzeug nach einem der Ansprüche 1 bis 12, **dadurch gekennzeichnet, dass** die Schneidplatten (I, II) in Kassetten eingespannt sind, die ihrerseits im Trägerkörper eingespannt sind.

14. Schneidwerkzeug nach Anspruch 13, **dadurch gekennzeichnet, dass** die Schneidplatten eines Paares jeweils in einer Kassette angeordnet sind.

## Claims

1. A rotary cutting tool with a holder body rotating about a central axis on which at least two cutting blades are mountable which have at least one cutting edge each and successively get in a metal-cutting engagement with a workpiece when the holder body rotates while simultaneously undergoing a linear forward feed, wherein the cutting blades are adapted to be advanced to a predetermined milling depth, **characterized in that** the cutting edge of one cutting blade (I) is disposed in an offset relationship from the cutting edge of the other cutting blade (II) so that different areas of the cutting edges get into engagement with the workpiece and each cutting edge makes a partial contribution to the predetermined milling depth (aₚ₀), wherein the cutting edge of the leading blade of a pair of cutting blades works up to a first milling depth and the trailing one makes the rest of the milling depth.

2. The cutting tool as claimed in claim 1, **characterized in that** the setting angles (κ) of the two cutting edges are equal.

3. The cutting tool as claimed in claim 1, **characterized in that** the setting angles (κ) are different.

4. The cutting tool as claimed in any one of claims 1 to 3, **characterized in that** the share of the cutting blades (I, II) in the milling depth (aₚ₀) of the two cutting blades is equal.

5. The cutting tool as claimed in any one of claims 1 to 3, **characterized in that** the share of the cutting blades (I, II) in the milling depth (aₚ₀) is different.

6. The cutting tool as claimed in any one of claims 3 to 5, **characterized in that** the setting angle (κ) of the cutting edge producing the remaining depth is larger than that of the other cutting edge.

7. The cutting tool as claimed in claim 5 or 6, **characterized in that** the milling depth of the cutting edge producing the remaining depth is smaller than that of the other cutting edge.

8. The cutting tool as claimed in claim 7, **characterized in that** the cutting edge producing the first milling depth serves as a roughing-down edge and that of the other cutting blade serves as a finish-milling edge.

9. The cutting tool as claimed in any one of claims 1 to 8, **characterized in that** the cutting blades (I, II) are of the same geometrical shape and have a straight or curved cutting edge.

10. The cutting tool as claimed in any one of claims 1 to 8, **characterized in that** a first cutting blade (I) is provided which has a circular cutting edge and a second cutting blade (II) is provided which has a straight cutting edge.

11. The cutting tool as claimed in claim 10, **characterized in that** the cutting edge of the circular cutting blade (I) serves as a finish-milling edge.

12. The cutting tool as claimed in any one of claims 1 to 11, **characterized in that** the cutting blades are reversible cutting blades.

13. The cutting tool as claimed in any one of claims 1 to 12, **characterized in that** the cutting blades (I, II) are clamped in cassettes which, in turn, are chucked in the holder body.

14. The cutting tool as claimed in claim 13, **characterized in that** the cutting blades of a pair each are disposed in a cassette.

## Revendications

1. Fraise tournante comprenant un corps de support tournant autour d'un axe central, sur lequel au moins deux plaquettes de coupe peuvent être fixées qui présentent respectivement au moins une arête de coupe et qui entrent en prise par enlèvement de copeaux l'une après l'autre avec une pièce à usiner lorsque le corps de support tourne et fait l'objet en même temps d'un mouvement d'avance linéaire, les plaquettes de coupe pouvant être approchées selon une profondeur de fraisage prédéterminée, **caractérisée en ce que** l'arête de coupe de l'une des plaquettes de coupe (I) est disposée de manière décalée par rapport à l'arête de coupe de l'autre plaquette de coupe (II) de sorte que différentes parties des arêtes de coupe entrent en prise avec la pièce à usiner et chaque arête de coupe accomplit une quantité partielle de la profondeur de fraisage prédéterminée (aₚ₀), l'arête de coupe de la plaquette en avant d'une paire de plaquettes de coupe travaillant jusqu'à une première profondeur de fraisage et celle en arrière réalisant le reste de la profondeur de fraisage.

2. Fraise selon la revendication 1, **caractérisée en ce que** les angles de direction (κ) des deux arêtes de coupe sont identiques.

3. Fraise selon la revendication 1, **caractérisée en ce que** les angles de direction (κ) sont différents.

4. Fraise selon l'une des revendications 1 à 3, **caractérisée en ce que** la part des arêtes de coupe (I, II) des deux plaquettes de coupe à la profondeur de fraisage (aₚ₀) est identique.

5. Fraise selon l'une des revendications 1 à 3, **caractérisée en ce que** la part des arêtes de coupe (I, II) à la profondeur de fraisage (aₚ₀) est différente.

6. Fraise selon l'une des revendications 3 à 5, **caractérisée en ce que** l'angle de direction (κ) de l'arête de coupe qui réalise la profondeur restante est supérieur à celui de l'autre arête de coupe.

7. Fraise selon la revendication 5 ou 6, **caractérisée en ce que** la profondeur de fraisage de l'arête de coupe qui réalise la profondeur restante est inférieure à celle de l'autre arête de coupe.

8. Fraise selon la revendication 7, **caractérisée en ce que** l'arête de coupe qui réalise la première profondeur de fraisage sert d'arête de coupe d'ébauche et celle de l'autre plaquette de coupe sert d'arête de coupe de finition.

9. Fraise selon l'une des revendications 1 à 8, **caractérisée en ce que** les plaquettes de coupe (I, II) sont formées à géométrie identique avec une arête de coupe rectiligne ou curviligne.

10. Fraise selon l'une des revendications 1 à 8, **caractérisée en ce qu'**une première plaquette de coupe (I) est prévue avec une arête de coupe circulaire et une seconde plaquette de coupe (II) est prévue avec une arête de coupe rectiligne.

11. Fraise selon la revendication 10, **caractérisée en ce que** l'arête de coupe de la plaquette de coupe (I) circulaire sert d'arête de coupe de finition.

12. Fraise selon l'une des revendications 1 à 11, **caractérisée en ce que** les plaquettes de coupe sont des plaquettes de coupe amovibles.

13. Fraise selon l'une des revendications 1 à 12, **caractérisée en ce que** les plaquettes de coupe (I, II) sont serrées dans des cassettes qui sont, elles, serrées dans le corps de support.

14. Fraise selon la revendication 13, **caractérisée en ce que** les plaquettes de coupe d'une paire sont disposées respectivement dans une cassette.
